# EUROPÄISCHE PATENTSCHRIFT

(11) **EP 2 772 379 B1**
(45) Veröffentlichungstag und Bekanntmachung des Hinweises auf die Patenterteilung: **18.11.2015**
(21) Anmeldenummer: 13004494.4
(22) Anmeldetag: 14.09.2013
(51) Int. Cl.: B60K 17/356, B60K 7/00, F04B 1/32

(54) **Antriebssystem für ein Kraftfahrzeug mit verstellbarer Konstant-Pumpeneinrichtung**
Drive system for a motor vehicle with an adjustable constant pumping device
Système d'entraînement pour un véhicule automobile doté d'un système de pompage constant réglable

(30) Priorität: 27.02.2013 DE 102013003338
(43) Veröffentlichungstag der Anmeldung: 03.09.2014
(73) Patentinhaber: MAN Truck & Bus AG, 80995 München (DE)
(72) Erfinder: Resch, Franz-Georg, 82299 Türkenfeld (DE); Rummich, Armin, 82346 Andechs/Erling (DE)

(56) Entgegenhaltungen:
- EP-A2- 0 922 858
- EP-A2- 2 559 581
- US-A- 1 624 363
- US-A- 5 251 537

## Beschreibung

Die Erfindung betrifft ein Antriebssystem für ein für den Straßenverkehr zugelassenes Kraftfahrzeug zur Personen- oder Güterbeförderung, insbesondere ein Nutzfahrzeug mit einer Höchstgeschwindigkeit grösser als 60km/h, wie etwa einen Omnibus oder einen Lastkraftwagen, mit vorzugsweise einem zulässigen Zug-Gesamtgewicht von über 2,8 Tonnen.

Aus dem Stand der Technik sind verschiedene Antriebssysteme für Nutzfahrzeuge bekannt, z.B. Antriebssysteme mit einer hydrostatisch angetriebenen Fahrzeugachse in Kombination mit über eine oder mehrere Gelenkwellen mechanisch angetriebenen Fahrzeugachsen. Die hydrostatisch angetriebenen Fahrzeugachsen stehen üblicherweise mit einer Pumpeneinrichtung in hydraulischer Wirkverbindung. Die Pumpeneinrichtungen sind z.B. als Verstellpumpen aus der Familie der Verdrängerpumpen ausgeführt, die je nach Fahrzustand ein variables Fördervolumen für die hydrostatisch angetriebenen Fahrzeugachsen zur Verfügung stellen. Die Verstellpumpen werden während des Betriebs kontinuierlich angesteuert und geregelt, um das Fördervolumen zu verändern. Nachteilig an solchen Verstellpumpen ist, dass sie technisch relativ aufwändig konstruiert sind und zudem ein Ansteuerungs- und Regelbedarf besteht, was des Weiteren mit hohen Kosten, Bauraumbedarf und Mehrgewicht verbunden ist. Ferner sind Pumpeneinrichtungen bekannt, die bauartbedingt für die hydrostatisch angetriebenen Fahrzeugachsen ein bei jeder Antriebswellenumdrehung konstantes Fördervolumen zur Verfügung stellen. Nachteilig an solchen Konstant-Verdrängerpumpeneinrichtungen ist, dass das in dem Fall konstruktiv und bauartbedingte vorgegebene konstante Fördervolumen in vielen Fällen vom optimalen Auslegungspunkt des Antriebssystems abweicht. EP 2 559 581 A2 z. B. offenbart ein Antriebssystem für ein Kraftfahrzeug gemäß dem Oberbegriff des Anspruchs 1, insbesondere ein Nutzfahrzeug. Das Antriebssystem umfasst mindestens eine erste Achse, die über einen Antriebsstrang antreibbar ist, mindestens eine zweite Achse, der mindestens ein hydraulischer Motor zugeordnet ist, um zumindest zwei Räder des Kraftfahrzeugs anzutreiben, und ein Bremssystem, das als Sperrdifferential für die zumindest zwei Räder wirkt.

US 1 624 363 A offenbart eine Pumpeneinrichtung , die eine Justierenrichtung aufweist, mittels der das bauartbedingt festgelegte Fördervolumen der Pumpeneinrichtung manuell veränderbar oder manuell vordefinierbar ist.

Eine Aufgabe der Erfindung ist es, ein alternatives und/oder verbessertes Antriebssystem für ein für den Straßenverkehr zugelassenes Kraftfahrzeug, vorzugsweise ein Nutzfahrzeug zur Personen- oder Güterbeförderung, zu schaffen.

Diese Aufgabe kann mit den Merkmalen des Hauptanspruchs gelöst werden. Vorteilhafte Weiterbildungen können den Unteransprüchen entnommen werden.

Die Erfindung schafft ein Antriebssystem für ein Kraftfahrzeug, vorzugsweise ein Nutzfahrzeug, z.B. ein Omnibus oder ein Lastkraftwagen, insbesondere mit einem zulässigen Zug-Gesamtgewicht von über 2,8 Tonnen und/oder einer zulässigen Höchstgeschwindigkeit grösser als 60km/h.

Das Antriebssystem umfasst zumindest eine hydrostatische Antriebseinrichtung zum Antreiben zumindest einer zweckmäßig vorderen Fahrzeugachse, die somit eine hydrostatisch angetriebene Fahrzeugachse darstellt. Die Antriebseinrichtung kann im Rahmen der Erfindung z.B. einen oder mehrere Radmotoren zum Antreiben der Räder der Fahrzeugachse aufweisen.

Es ist möglich, dass das Antriebssystem zudem vorzugsweise eine Gelenkwelle zum Antreiben zumindest einer zweckmäßig hinteren Fahrzeugachse aufweist, die somit eine mechanisch angetriebene Fahrzeugachse darstellt.

Das Antriebssystem umfasst des Weiteren eine Pumpeneinrichtung, die mit der hydrostatischen Antriebseinrichtung in Wirkverbindung steht, vorzugsweise über einen geschlossenen hydraulischen Kreislauf.

Das Antriebssystem zeichnet sich insbesondere dadurch aus, dass die Pumpeneinrichtung eine Justiereinrichtung aufweist, mittels der das insbesondere bauartbedingt festgelegte Fördervolumen der Pumpeneinrichtung, das der hydrostatischen Antriebseinrichtung zur Verfügung gestellt wird, manuell und somit mechanisch und/oder von außen verändert werden kann. Das Fördervolumen ist somit zweckmäßig manuell vordefinierbar.

Die Justiereinrichtung kann z.B. genutzt werden, das Fördervolumen der Pumpeneinrichtung vor Inbetriebnahme und/oder nach Inbetriebnahme zu verändern, um zweckmäßig eine optimierte Auslegung des Antriebssystems zu erzielen.

Das Fördervolumen der Pumpeneinrichtung kann mittels der Justiereinrichtung z.B. an unterschiedliche Fahrzeugtriebstränge adaptiert werden. Z.B. kann mittels des erfindungsgemäßen Antriebssystems das Anwendungsspektrum auf unterschiedlich mechanisch mögliche und üblicherweise bauartbedingt festgelegte Antriebsachsübersetzungen erweitert werden.

Die Justiereinrichtung trägt somit insbesondere dazu bei, dass die Effizienz des Antriebssystems gesteigert werden kann und/oder die Pumpeneinrichtung universell einsetzbar ist.

Die Pumpeneinrichtung ist vorzugsweise als Konstant-Pumpeneinrichtung ausgeführt (z.B. als Axialkolbenpumpe, Verdrängerkolbenpumpe, etc.), die der hydrostatischen Antriebseinrichtung während des Betriebs ein Fördervolumen zur Verfügung stellt, das stets direkt proportional zur Antriebsdrehzahl der Pumpeneinrichtung ist und mittels der Justiereinrichtung manuell vordefinierbar ist. Die Konstant-Pumpeneinrichtung stellt während des Betriebs bei einer bestimmten Drehzahl ein durch die Bauart der Pumpeneinrichtung festgelegtes und damit fixes Fördervolumen für die hydrostatische Antriebseinrichtung zur Verfügung und wird insbesondere während des Betriebs nicht quasi kontinuierlich angesteuert und geregelt, um das Fördervolumen zu verändern.

Es ist möglich, dass die Pumpeneinrichtung als Schrägachsen- oder Schrägscheiben-Axialkolbenpumpe ausgeführt ist.

Die Justiereinrichtung kann z.B. dazu dienen, den Anstellwinkel der Schrägscheibe der Schrägscheiben-Axialkolbenpumpe einzustellen, um das Fördervolumen der Pumpeneinrichtung zu verändern oder vorzudefinieren.

Es ist möglich, dass die Justiereinrichtung eine Stellschraubenkonfiguration umfasst.

Die Pumpeneinrichtung ist über eine Übersetzungseinheit (z.B. eine Zahnradpaarung) mit der Gelenkwelle verbunden. Die Übersetzungseinheit dient dazu,das Fördervolumen der Pumpeneinrichtung an das Schluckvolumen der hydrostatischen An5 triebseinrichtung so anzupassen, dass die Geschwindigkeit der mittels der hydrostatischen Antriebseinrichtung angetriebenen Fahrzeugachse der Geschwindigkeit der mittels der Gelenkwelle angetriebenen Fahrzeugachse entspricht oder zumindest proportional dazu ist.

Die Pumpeneinrichtung kann mittels der Justiereinrichtung so eingestellt werden, dass eine vordere, zweckmäßig mittels der hydrostatischen Antriebseinrichtung angetriebene Fahrzeugachse einer hinteren, zweckmäßig mittels einer Gelenkwelle angetriebenen Fahrzeugachse, vorauseilt, um die Fahrdynamik zu verbessern.

Es ist möglich, dass das Antriebssystem mit einem Steuerventil versehen ist, über das die Verbindung zwischen der Pumpeneinrichtung und der hydrostatischen Antriebseinrichtung wahlweise geschlossen und getrennt werden kann. Ebenso kann die Pumpeneinrichtung mechanisch - z.B. über eine mechanische Kupplungseinrichtung vom mechanischen Gelenkwellenstrang getrennt werden.

Zu erwähnen ist, dass das Antriebssystem mehrere hydrostatisch angetriebene und/oder oder mehrere mechanisch, z.B. gelenkwellig angetriebene Fahrzeugachsen umfassen kann. Die zumindest eine hydrostatisch angetriebene Fahrzeugachse ist vorzugsweise eine vordere Fahrzeugachse. Die zumindest eine mechanisch z. B. mittels Gelenkwellen angetriebene Fahrzeugachse ist vorzugsweise eine hintere Fahrzeugachse.

Die Erfindung umfasst zudem ein Kraftfahrzeug mit einem Antriebssystem wie hierin beschrieben. Das Kraftfahrzeug ist vorzugsweise ein Nutzfahrzeug, z.B. ein Omnibus oder ein Lastkraftwagen, zweckmäßig mit einem zulässigen Zug-Gesamtgewicht von über 2,8 Tonnen und/oder einer zulässigen Höchstgeschwindigkeit grösser als 60km/h.

Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Fig. 1: zeigt eine schematische Ansicht eines Antriebssystems gemäß einer Ausführungsform der Erfindung, und
- Fig. 2: zeigt eine vergrößerte Ansicht der Pumpeneinrichtung aus Figur 1.

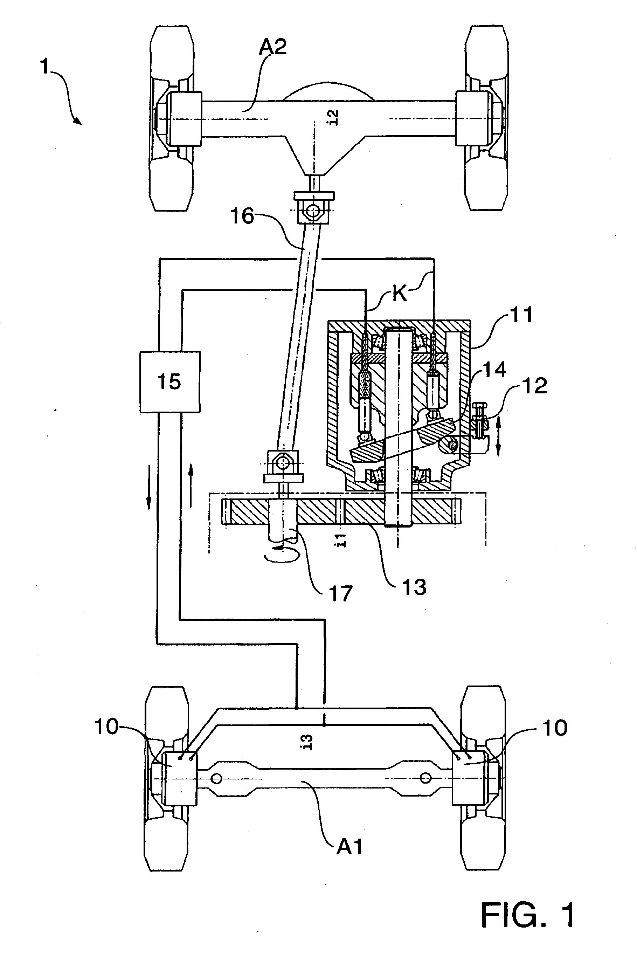

Figur 1 zeigt eine schematische Ansicht eines Antriebssystems 1 für ein Nutzfahrzeug mit einem zulässigen Zug-Gesamtgewicht von über 2,8 Tonnen. Das Antriebssystem 1 umfasst eine vordere Fahrzeugachse A1 und eine hintere Fahrzeugachse A2.

Die vordere Fahrzeugachse A1 ist mittels einer zwei Radmotoren aufweisenden hydrostatischen Antriebseinrichtung 10 antreibbar und stellt somit eine hydrostatisch angetriebene Fahrzeugachse dar. Sie weist ein Übersetzungsverhältnis "i3" auf.

Die hintere Fahrzeugachse A2 ist mittels einer Gelenkwelle 16 antreibbar und stellt somit eine mechanisch angetriebene Fahrzeugachse dar. Sie weist ein Übersetzungsverhältnis "i2" auf.

Das Antriebssystem 1 umfasst eine Pumpeneinrichtung 11, die über einen geschlossenen hydraulischen Fluidkreislauf K mit der hydrostatischen Antriebseinrichtung 10 verbunden ist. Die Pumpeneinrichtung 11 ist zudem über eine als Zahnradpaarung ausgeführte Übersetzungseinheit 13 und die Gelenkwelle 16 mit der hinteren Fahrzeugachse A2 verbunden. Die Pumpeneinrichtung 11 ist des Weiteren über die Übersetzungseinheit 13 mit einem Nebenabtrieb 17 des Antriebssystems 1 verbunden. Die Übersetzungseinheit 13 weist zwischen der Pumpeneinrichtung 11 und der Gelenkwelle 16 und/oder dem Nebenabtrieb 17 ein Übersetzungsverhältnis "i1" auf.

Die Geschwindigkeit der hydrostatisch angetriebenen Fahrzeugachse A1 wird proportional zu der Geschwindigkeit der mechanisch angetriebenen Fahrzeugachse A2 eingestellt. Die Übersetzungseinheit 13, die ein passend zu den Kennwerten der beteiligten Komponenten ausgelegtes Übersetzungsverhältnis "i1" aufweist, passt das Fördervolumen der Pumpeneinrichtung 11 so an das Schluckvolumen der Antriebseinrichtung 10 und somit der Radmotoren an (hydraulisches Übersetzungsverhältnis "i3"), dass sich an der hydrostatisch angetriebenen Fahrzeugachse A1 zumindest nahezu die gleiche Geschwindigkeit ergibt wie an der mechanisch angetriebenen Fahrzeugachse A2.

Der geschlossene Kreislauf K wirkt als "hydraulische Gelenkwelle", die über ein Steuerventil 15 sowie einer möglichen mechanischen Zuschaltung der Pumpeneinrichtung 11 über eine Kupplung an den Fahrzeugtriebstrang wahlweise zugeschaltet oder abgeschaltet werden kann.

Mittels üblichen Konstant-Pumpeneinrichtung ergeben sich in der Praxis z.B. aus mechanisch vorgegebenen Wellen-Achsabständen und/oder über geeignete Zahnradpaarungen z.B. im Nebenabtrieb aus dem Verhältnis der Zähnezahlen erreichbaren hydraulischen Fördervolumina Einschränkungen in Bezug auf eine optimale Auslegung des Antriebssystems.

Die Pumpeneinrichtung 11 entgegnet insbesondere diesem Nachteil mit einer Justiereinrichtung 12, mittels der das Fördervolumen der Pumpeneinrichtung 11, das der hydrostatischen Antriebseinrichtung 10 zur Verfügung gestellt wird, von außen manuell und mechanisch verändert oder vordefiniert werden kann. Dadurch kann eine quasi optimale hydraulische Auslegung des Antriebssystems 1 erzielt werden. Ferner ist die Pumpeneinrichtung 11 somit an unterschiedliche Systemerfordernisse anpassbar. Z.B. können Einstellungen realisiert werden, die durch eine reine Paarung der Zähnezahlen z.B. der Zahnradpaarung 13 rechnerisch nicht darstellbar sind. Die Justiereinrichtung 12 ermöglicht zudem, das Fördervolumen nachzujustieren, z.B. wenn während einer Fahrzeugwartung festgestellt werden sollte, dass es nicht mehr optimal abgestimmt ist, z.B. verursacht durch Verschleißeffekte. In der Praxis wird es meist ausreichend sein, das Fördervolumen nur einmal oder maximal nur wenige Male in Bezug auf die Fahrzeuglebensdauer zu optimieren.

Das Fördervolumen der Pumpeneinrichtung 11 kann ferner mittels der Justiereinrichtung 12 z.B. so eingestellt werden, dass die vordere Fahrzeugachse A1 der hinteren Fahrzeugachse A2 vorauseilt.

Die Pumpeneinrichtung 11 ist als Konstant-Pumpeneinrichtung ausgeführt, die der hydrostatischen Antriebseinrichtung 10 während des Betriebs ein zur Antriebsdrehzahl der Pumpeneinrichtung 11 proportionales Fördervolumen zur Verfügung stellt.

Die Pumpeneinrichtung 11 stellt somit keine während des Betriebs quasi kontinuierlich angesteuerte und geregelte Pumpeneinrichtung dar, sondern ist als Konstant-Pumpeneinrichtung ausgeführt, deren bauartbedingtes Konstant-Fördervolumen allerdings durch die Justiereinrichtung 12 manuell veränderbar und somit vordefinierbar ist.

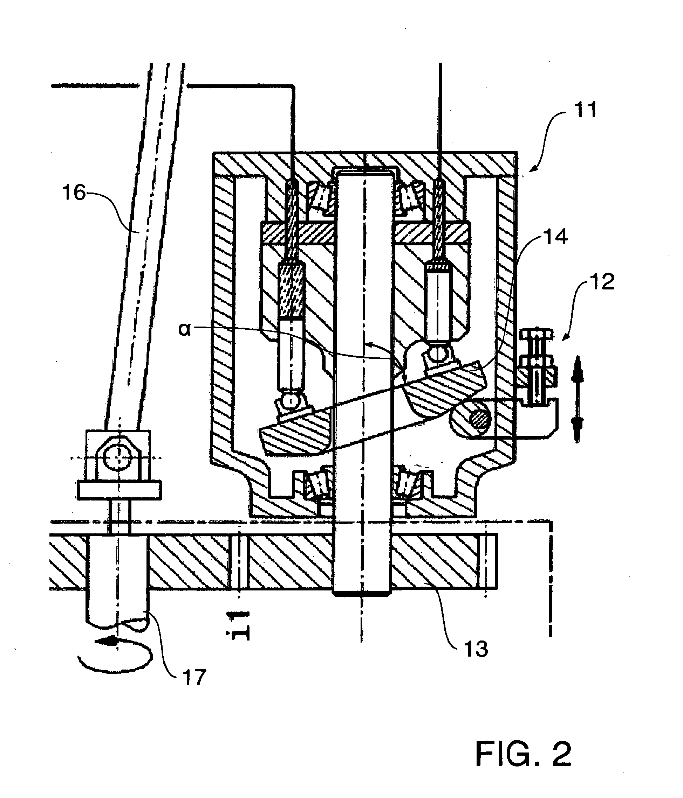

Figur 2 zeigt eine vergrößerte Ansicht der Pumpeneinrichtung 11 der Figur 1. Figur 2 zeigt, dass die Pumpeinrichtung 11 als Schrägscheiben-Axialkolbenpumpe ausgeführt ist und somit eine Schrägscheibe 14 aufweist. Figur 2 ist zu entnehmen, dass die Justiereinrichtung 12 beispielsweise als Stellschraubenkonfiguration ausgeführt ist und dazu dient, den Anstellwinkel α der Schrägscheibe 14 einzustellen. Es ist möglich, alternative technisch gleichwertige Verstellmechanismen zu diesem Zweck einzusetzen, beispielsweise als einzusetzende Unterlegkeile ausgeführt.

Zu erwähnen ist, dass das Antriebssystem 1 im Rahmen der Erfindung auch mehrere hydrostatisch angetriebene Fahrzeugachsen A1 und/oder mehrere gelenkwellig angetriebene Fahrzeugachsen A2 aufweisen kann. Zu erwähnen ist ferner, dass im Rahmen der Erfindung andere Konstant-Pumpeneinrichtungen als Schrägscheiben-Axialkolbenpumpen möglich sind, z.B. Verdrängerkolben, etc..

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Antriebssystem (1) für ein Kraftfahrzeug, mit
- zumindest einer hydrostatischen Antriebseinrichtung (10) zum Antreiben einer Fahrzeugachse (A1),
- einer Gelenkwelle (16) zum Antreiben einer anderen Fahrzeugachse (A2), und
- einer Pumpeneinrichtung (11), die mit der hydrostatischen Antriebseinrichtung (10) verbunden ist,
wobei die Pumpeneinrichtung (11) über eine Übersetzungseinheit (13) mit der Gelenkwelle (16) verbunden ist, **dadurch gekennzeichnet, dass**
- die Pumpeneinrichtung (11) eine Justiereinrichtung (12) aufweist, mittels der das bauartbedingt festgelegte Fördervolumen der Pumpeneinrichtung (11), das der hydrostatischen Antriebseinrichtung (10) zur Verfügung gestellt wird, manuell veränderbar oder manuell vordefinierbar ist, und
- die Übersetzungseinheit (13) dazu dient, das Fördervolumen der Pumpeneinrichtung (11) an das Schluckvolumen der hydrostatischen Antriebseinrichtung (10) so anzupassen, dass die Geschwindigkeit der mittels der hydrostatischen Antriebseinrichtung (10) angetrieben Fahrzeugachse (A1) an die Geschwindigkeit der mittels der Gelenkwelle (16) angetriebenen Fahrzeugachse (A2) angepasst wird.

2. Antriebssystem (1) nach Anspruch 1, **dadurch gekennzeichnet, dass** die Pumpeneinrichtung (11) als Konstant-Pumpeneinrichtung ausgeführt ist und das Fördervolumen ein zur Antriebsdrehzahl der Pumpeneinrichtung (11) proportionales Fördervolumen darstellt.

3. Antriebssystem (1) nach Anspruch 1 oder 2, **dadurch gekennzeichnet, dass** die Pumpeneinrichtung (11) als Axialkolbenpumpe oder Verdrängerkolbenpumpe ausgeführt ist.

4. Antriebssystem (1) nach einem der vorhergehenden Ansprüche, **dadurch gekennzeichnet, dass** die Pumpeneinrichtung (11) als Schrägscheiben-Axialkolbenpumpe ausgeführt ist.

5. Antriebssystem (1) nach Anspruch 4, **dadurch gekennzeichnet, dass** die Justiereinrichtung (12) dazu dient, den Anstellwinkel (α) der Schrägscheibe (14) der Schrägscheiben-Axialkolbenpumpe einzustellen.

6. Antriebssystem (1) nach einem der vorhergehenden Ansprüche, **dadurch gekennzeichnet, dass** die Justiereinrichtung (12) eine Stellschraubenkonfiguration umfasst.

7. Antriebssystem (1) nach einem der vorhergehenden Ansprüche, **dadurch gekennzeichnet, dass** die Pumpeneinrichtung (11) mittels der Justiereinrichtung (12) so einstellbar ist, dass die vordere mittels der hydrostatischen Antriebseinrichtung (10) angetriebene Fahrzeugachse (A1) der hinteren mittels der Gelenkwelle (16) angetriebenen Fahrzeugachse (A2) vorauseilt.

8. Antriebssystem (1) nach einem der vorhergehenden Ansprüche, **dadurch gekennzeichnet, dass** das Antriebssystem (1) ein Steuerventil (15) aufweist, über das die Verbindung zwischen der Pumpeneinrichtung (11) und der hydrostatischen Antriebseinrichtung (10) geschlossen oder getrennt werden kann.

9. Antriebssystem (1) nach einem der vorhergehenden Ansprüche, **dadurch gekennzeichnet, dass** das Kraftfahrzeug ein Nutzfahrzeug ist und/oder die Pumpeneinrichtung (11) über einen geschlossenen hydraulischen Kreislauf (K) mit der hydrostatischen Antriebseinrichtung (10) verbunden ist.

10. Kraftfahrzeug, vorzugsweise Nutzfahrzeug, mit einem Antriebssystem (1) nach einem der vorhergehenden Ansprüche.

## Claims

1. A drive system (1) for a motor vehicle, having
- at least one hydrostatic drive device (1C) for driving one vehicle axle (A1),
- an articulated shaft (16) for driving another vehicle axle (A2), and
- a pump device (11) which is connected to the hydrostatic drive device (10),
the pump device (11) being connected via a transmission unit (13) to the articulated shaft (16),
**characterized in that**
- the pump device (11) has an adjusting device (12), by means of which the delivery volume of the pump device (11), which delivery volume is fixed by the design and is made available to the hydrostatic drive device (10), can be changed manually or can be predefined manually, and
- the transmission unit (13) serves to adapt the delivery volume of the pump device (11) to the displacement of the hydrostatic drive device (10) in such a way that the speed of the vehicle axle (A1) which is driven by means of the hydrostatic drive device (10) is adapted to the speed of the vehicle axle (A2) which is driven by means of the articulated shaft (16).

2. The drive system (1) according to Claim 1, **characterized in that** the pump device (11) is configured as a fixed displacement pump device, and the delivery volume represents a delivery volume which is proportional to the drive speed of the pump device (11).

3. The drive system (1) according to Claim 1 or 2, **characterized in that** the pump device (11) is configured as an axial piston pump or positive displacement piston pump.

4. The drive system (1) according to one of the preceding claims, **characterized in that** the pump device (11) is configured as a swash plate axial piston pump.

5. The drive system (1) according to Claim 4, **characterized in that** the adjusting device (12) serves to set the angle of attack (α) of the swash plate (14) of the swash plate axial piston pump.

6. The drive system (1) according to one of the preceding claims, **characterized in that** the adjusting device (12) comprises a setting screw configuration.

7. The drive system (1) according to one of the preceding claims, **characterized in that** the pump device (11) can be set by means of the adjusting device (12) in such a way that the front vehicle axle (A1) which is driven by means of the hydrostatic drive device (10) runs ahead of the rear vehicle axle (A2) which is driven by means of the articulated shaft (16).

8. The drive system (1) according to one of the preceding claims, **characterized in that** the drive system (1) has a control valve (15), via which the connection between the pump device (11) and the hydrostatic drive device (10) can be closed or disconnected.

9. The drive system (1) according to one of the preceding claims, **characterized in that** the motor vehicle is a commercial vehicle and/or the pump device (11) is connected via a closed hydraulic circuit (K) to the hydrostatic drive device (10).

10. A motor vehicle, preferably commercial vehicle, having a drive system (1) according to one of the preceding claims.

## Revendications

1. Système d'entraînement (1) pour un véhicule automobile, comprenant :
- au moins un dispositif d'entraînement hydrostatique (10) pour l'entraînement d'un essieu de véhicule (A1),
- un arbre d'articulation (16) pour l'entraînement d'un autre essieu de véhicule (A2), et
- un dispositif de pompe (11) qui est connecté au dispositif d'entraînement hydrostatique (10),
- le dispositif de pompe (11) étant connecté par le biais d'une unité de transmission (13) à l'arbre d'articulation (16),
**caractérisé en ce que**
- le dispositif de pompe (11) présente un dispositif d'ajustement (12) au moyen duquel le volume de refoulement du dispositif de pompe (11), fixé par la construction, dont dispose le dispositif d'entraînement hydrostatique (10), peut être modifié manuellement ou être prédéfini manuellement, et
- l'unité de transmission (13) sert à adapter le volume de refoulement du dispositif de pompe (11) à la cylindrée du dispositif d'entraînement hydrostatique (10) de telle sorte que la vitesse de l'essieu de véhicule (A1) entraîné au moyen du dispositif d'entraînement hydrostatique (10) soit adaptée à la vitesse de l'essieu de véhicule (A2) entraîné au moyen de l'arbre d'articulation (16).

2. Système d'entraînement (1) selon la revendication 1, **caractérisé en ce que** le dispositif de pompe (11) est réalisé sous forme de dispositif de pompe constante, et le volume de refoulement constitue un volume de refoulement proportionnel à la vitesse de rotation d'entraînement du dispositif de pompe (11).

3. Système d'entraînement (1) selon la revendication 1 ou 2, **caractérisé en ce que** le dispositif de pompe (11) est réalisé sous forme de pompe à piston axial ou de pompe à piston volumétrique.

4. Système d'entraînement (1) selon l'une quelconque des revendications précédentes, **caractérisé en ce que** le dispositif de pompe (11) est réalisé sous forme de pompe à piston axial à disque en mutation.

5. Système d'entraînement (1) selon la revendication 4, **caractérisé en ce que** le dispositif d'ajustement (12) sert à ajuster l'angle d'attaque (α) du disque en mutation (14) de la pompe à piston axial à disque en mutation.

6. Système d'entraînement (1) selon l'une quelconque des revendications précédentes, **caractérisé en ce que** le dispositif d'ajustement (12) comprend une configuration à vis de réglage.

7. Système d'entraînement (1) selon l'une quelconque des revendications précédentes, **caractérisé en ce que** le dispositif de pompe (11) peut être ajusté au moyen du dispositif d'ajustement (12) de telle sorte que l'essieu avant du véhicule (A1) entraîné au moyen du dispositif d'entraînement hydrostatique (10) soit en avance de l'essieu arrière du véhicule (A2) entraîné au moyen de l'arbre d'articulation (16).

8. Système d'entraînement (1) selon l'une quelconque des revendications précédentes, **caractérisé en ce que** le système d'entraînement (1) présente une soupape de commande (15) par le biais de laquelle la connexion entre le dispositif de pompe (11) et le dispositif d'entraînement hydrostatique (10) peut être fermée ou ouverte.

9. Système d'entraînement (1) selon l'une quelconque des revendications précédentes, **caractérisé en ce que** le véhicule automobile est un véhicule utilitaire et/ou le dispositif de pompe (11) est connecté par le biais d'un circuit hydraulique fermé (K) au dispositif d'entraînement hydrostatique (10).

10. Véhicule automobile, de préférence véhicule utilitaire, comprenant un système d'entraînement (1) selon l'une quelconque des revendications précédentes.
